# FASCICULE DE BREVET EUROPEEN

(11) **EP 0 642 875 B1**
(45) Date de publication et mention de la délivrance du brevet: **16.04.1997**
(21) Numéro de dépôt: 94440031.6
(22) Date de dépôt: 11.05.1994
(51) Int. Cl.: B23K 26/00, F17C 1/00, F17C 13/00, F17C 13/08

(54) **Procédé et installation de fabrication et d'assemblage de bouteilles, notamment à gaz liquéfié, ainsi que de telles bouteilles**
Verfahren und Vorrichtung zum Herstellen von Flüssiggasflaschen, und hergestellte Flaschen
Process and apparatus to manufacture liquified gas bottles, and such manufactured bottles

(30) Priorité: 08.06.1993 FR 9307025
(43) Date de publication de la demande: 15.03.1995
(73) Titulaire: SCHNEIDER INDUSTRIE S.I. Société Anonyme dite :, F-67240 Bischwiller (FR)
(72) Inventeur: Wendling, Jean, F-67410 Drusenheim (FR)
(74) Mandataire: Rhein, Alain

(56) Documents cités:
- EP-A- 0 434 110
- EP-A- 0 487 438
- DE-U- 9 102 936
- FR-A- 2 543 923
- FR-A- 2 575 765

## Description

L'invention concerne un procédé et une installation de fabrication et d'assemblage de bouteilles, notamment à gaz liquéfié.

En raison de leur contenu, les bouteilles à gaz liquéfié sont, à l'heure actuelle, de fabrication délicate et nécessitent l'exécution d'une multitude d'opérations pour aboutir à un produit résistant non seulement mécaniquement, mais également à la corrosion et, qui, par ailleurs, est fiable du point de vue de l'étanchéité.

Ainsi, de telles bouteilles sont constituées, habituellement, au moyen de deux demi-coquilles, obtenues par emboutissage ou analogue et dont l'une constitue la partie inférieure de la bouteille, tandis que l'autre sa partie supérieure. En fait, ces deux demi-coquilles sont assemblées par soudure. A noter, au passage, que le fond de telles bouteilles est, habituellement, équipé d'une assise sous forme d'un rebord annulaire rapporté par soudure. Quant à la partie supérieure, elle présente des moyens de réception d'un organe du type robinet et détendeur.

On connaît, par ailleurs, par le document EP-A-0.434.110, une bouteille, notamment destinée à contenir du gaz liquéfié, comprenant un contenant sous forme d'une virole refermée, à ses extrémités supérieure et inférieure, par l'intermédiaire, respectivement, d'un couvercle et d'un fond. Ces derniers comportent un bord périphérique venant se superposer, du côté interne, au bord supérieur et inférieur de ladite virole.

En fait, la soudure réalisée entre les deux demi-coquilles ou encore entre la virole et le couvercle ou encore le fond, est une soudure par apport de matières, du type par arc immergé, nécessitant une préparation minutieuse des supports, ainsi que du joint de soudure. Plus précisément, les différentes pièces doivent être parfaitement nettoyées et dégraissées, par exemple, par grenaillage, avant que l'on ne puisse effectuer une soudure dont il convient de rappeler qu'elle doit être parfaitement étanche. De plus, il y a lieu de remarquer qu'en raison de l'apport en matière en fusion, le ou les joints de soudure doivent, dans certains cas, être bouchés au niveau de la partie interne de la bouteille, par exemple à l'aide d'un plat métallique, en acier ou en cuivre, qui, selon le procédé de fabrication adopté est retiré ou, au contraire, maintenu en position après soudure. Dans tous les cas, la soudure par apport de matières nécessite l'aménagement d'un espace à hauteur du joint de soudure, dans lequel peut prendre position le métal en fusion.

L'inconvénient primordial de ce type de soudure, par apport de matière, est lié à l'augmentation importante de la température des éléments assemblés sur une zone importante autour du joint de soudure. En effet, il en résulte des tensions internes telles, que les demi-coquilles se déforment, nécessitant un recuit de normalisation à environ 900° Celsius.

Il est alors nécessaire de débarrasser, à nouveau, les demi-coquilles de la calamine qui les recouvre suite à cette opération de normalisation, ceci par une nouvelle opération de grenaillage. S'en suivent les opérations de vérification d'étanchéité qui, là encore, sont longues et fastidieuses dans la mesure où les bouteilles sont remplies, dans ce but, d'un liquide mis sous pression. De ce fait, après les tests, il est nécessaire de sécher ces bouteilles.

Arrivent, enfin, les étapes de traitement contre la corrosion consistant en une opération, soit de métallisation, soit d'application d'une peinture au zinc. Pour terminer, ces bouteilles reçoivent un revêtement de finition. Dans tous les cas, qu'il s'agisse d'une protection par métallisation ou par application de peinture au zinc, celle-ci nécessite des installations complexes avec une emprise au sol non négligeable ce qui, là encore, se repercute sur le coût de revient de telles bouteilles à gaz liquéfié.

L'on note qu'il est également connu, notamment par le document FR-A-2.543.923 des récipients, du type bombe aérosol, comprenant un contenant en tôle définissant une virole à l'extrémité supérieure de laquelle celle-ci reçoit un couvercle, également en tôle. En fait, les deux pièces sont, dans ce cas, assemblées par soudure au laser. Ainsi, le bord supérieur de la partie cylindrique formant le contenant de la bombe aérosol comporte, tout d'abord, un rétreint, puis est repliée, radialement, vers l'extérieur de manière à former une collerette. De même, la partie formant couvercle, comporte, à sa base, une collerette de forme annulaire venant se superposer à celle du contenant. Le rayon laser est, dans ce cas, orienté perpendiculairement à la paroi de la collerette du couvercle.

Parallèlement, l'on observera qu'il est connu, par le document JP-A-2.258.188, un équipement de soudure au rayon laser comportant un mécanisme à même d'exécuter un mouvement de balayage de manière à couvrir une zone de soudure. En fait, au cours de ce mouvement de balayage il est communiqué, à la lentille de concentration du faisceau laser, ainsi qu'au support d'outils, un mouvement alternatif synchronisé avec ce mouvement de balayage du mécanisme. En fin de compte, il est recherché, dans ce document antérieur à communiquer à la torche laser un mouvement rectiligne de va et vient pour couvrir une zone de soudure.

L'invention a pour but de remédier à l'ensemble de ces inconvénients du procédé connu pour la réalisation de bouteilles, notamment à gaz liquéfié, ceci au travers d'un nouveau procédé, ainsi que d'une installation permettant sa mise en oeuvre.

A cet effet, l'invention concerne un procédé de fabrication et d'assemblage de bouteilles, notamment de gaz liquéfié, consistant, après conception d'au moins un couvercle et d'un contenant, se présentant sous forme d'une virole préequipée ou non d'un fond, à préformer le bord périphérique du couvercle de sorte qu'il puisse se superposer, du côté externe, ou interne, a bord supérieur de la virole et que l'interstice préservé entre eux est au plus égal à 2/10 de l'épaisseur des parois qui les composent et qu'après application d'un revêtement de protection anticorrosion par métallisation sur ce couvercle et ce contenant, on réalise une figure pénétrante au laser entre le bord périphérique dudit couvercle et le bord supérieur de la virole, ceci par déplacement relatif du joint de soudure au droit d'une torche laser.

Par ailleurs, l'invention concerne une installation permettant la mise en oeuvre de ce procédé, comportant une torche laser équipée, d'une part, de moyens de prise de référence sur la bouteille à assembler par soudure en vue d'assurer son maintien à une distance et dans une position constante par rapport au joint de soudure et, d'autre part, de moyens pour maintenir en applique ces moyens de prise de référence sur ladite bouteille, l'installation étant complétée par des moyens de commande en rotation de la bouteille en vue de faire évoluer ledit joint de soudure au droit de ladite torche laser.

Les avantages obtenus grâce a cette invention consistent, essentiellement, en ce qu'au travers du procédé, conforme à l'invention, on évite les surchauffes locales de la bouteille ainsi réalisée, ce qui permet de s'affranchir du recuit de normalisation et, de ce fait, de l'opération de grenaillage en vue de la suppression de la calamine.

Ce procédé permet, également, d'éviter les déformations issues, habituellement, de la soudure elle-même. Ceci a pour avantage de concevoir une bouteille sous forme d'une virole à même de recevoir à son extrémité supérieure et, le cas échéant, à son extrémité inférieure, respectivement, un couvercle et un fond. Une telle virole ainsi que le couvercle et le fond sont, bien entendu, de conception plus aisée en comparaison aux demi-coquilles correspondant à l'état de la technique.

Le procédé, selon l'invention, a, également, pour avantage de ne pas conduire à une forme de réalisation unique de ces bouteilles à gaz.

L'invention est décrite ci-après plus en détails à l'aide de dessins ne correspondant qu'à un exemple de réalisation.
- la figure 1 représente une vue schématisée de l'installation permettant la mise en oeuvre du procédé selon l'invention ;
- la figure 2 représente une demi-vue schématisée et en coupe d'une bouteille à gaz issue du procédé selon l'invention ;
- la figure 3 représente une vue similaire à la figure 2 et correspondant à un autre mode de réalisation ;
- la figure 4 correspond, tout comme la figure 3, à un troisième mode de réalisation d'une bouteille notamment à gaz liquéfié ;
- la figure 5 représente une demi-vue schématisée et en coupe d'une bouteille à gaz exécutée selon un quatrième mode de réalisation ;
- la figure 6 représente une vue schématisée et en demi-coupe d'une bouteille à gaz liquéfié conforme à un cinquième mode de réalisation.

La présente invention est relative à un procédé de fabrication et d'assemblage de bouteilles 1, notamment à gaz liquéfié.

En fait, selon l'invention, ces bouteilles 1 se composent d'un couvercle 2 et d'un contenant 3 lequel est défini par une virole 4 et un fond 5.

A noter que le couvercle 2 est muni de moyens de réception 6 d'un organe, tel qu'un robinet et/ou un détendeur. de plus, en ce qui concerne le contenant 3, la virole 4 peut être prééquipée, par exemple, au travers d'un procédé d'emboutissage, du fond 5. Cependant, celui-ci peut être rapporté à la virole 4 tout comme le couvercle 2, à l'aide du procédé selon l'invention.

A ce propos, ce procédé consiste, précisément, après conception du couvercle 2 et du contenant 3, à préformer le bord périphérique 7 de ce couvercle 2 de sorte qu'il puisse se superposer, du côté interne 8, ou du côté externe 9 de la virole 4, au bord supérieur 10 de cette dernière, ceci de sorte que l'espace préservé entre ce bord périphérique 7 et ledit bord supérieur 10 soit au plus égal à 2/10 de l'épaisseur 11 des parois que compose ce couvercle 2 et le contenant 3, autorisant ainsi la réalisation d'une soudure pénétrante au laser. En fait, de bons résultats sont obtenus lorsque le joint de soudure 12, défini par cet espace préservé entre le bord périphérique 7 et le bord supérieur 10 est au plus égal à 1/10 de l'épaisseur 11 des parois.

Ainsi, l'installation 13 permettant la mise en oeuvre de ce procédé comporte une torche laser 14 équipée de moyens de prise de référence 15 à même de coopérer avec l'une des pièces 2, 3 à assembler de manière à préserver à ladite torche laser 14, une distance et une position constante par rapport au joint de soudure 12. Cette installation 13 comporte, également, des moyens 16 à même de maintenir en applique, par l'intermédiaire des moyens de prise de référence 16, la torche laser 14 sur l'une desdites pièces 2, 3 à assembler. On note, en outre, la présence de moyens de commande en déplacement relatifs de la torche laser 14 le long du joint de soudure 12. En fait, de tels moyens (non représentés) se présentent, préférentiellement, sous forme de moyens de commande en rotation de la bouteille 1 en vue de faire évoluer le joint de soudure 12 au droit de ladite torche laser 14.

L'on observe qu'au travers des moyens de prise de référence 15 ainsi que des moyens de mise en applique 16, la forme de la bouteille 1 et, donc, le dessin du joint de soudure 12, n'a que peu d'importance, puisque, telle une machine à copier, la torche laser 14 conserve sa position par rapport audit joint de soudure 12.

Au cas où le fond 6 ne fait pas partie intégrante de la virole 4, de manière à définir le contenant 3, il peut être rapporté à cette virole 4, selon le même procédé mis en oeuvre pour la pose du couvercle 2. Par conséquent, selon ce procédé, le bord périphérique 17 de ce fond 5 est préformé de sorte qu'il soit à même de se superposer au bord inférieur 18, du côté interne 8 ou externe 9, de la virole 4 en respectant un interstice au plus égal à 2/10 de préférence inférieur à 1/10 de l'épaisseur 11 des parois composant cette virole 4 et ce fond 5. Puis l'on procède à la soudure pénétrante au laser.

Il convient d'observer, à ce propos, qu'une telle soudure pénétrante au laser présente, en comparaison aux procédés de soudure habituels par arc immergé, des qualités supérieures telles, qu'il est envisageable de procéder au contrôle d'étanchéité de ces soudures laser par ultra-son, procédé non destructif et/ou de remplacer l'épreuve de contrôle sous pression d'eau, nécessitant un séchage ultérieur, par une épreuve de contrôle à l'hélium basse pression plus performante et à laquelle ne peut satisfaire aucun des procédés de soudure traditionnelle. De plus, l'on peut penser que cette qualité de soudure au laser permet d'effectuer un contrôle d'étanchéité par sondage au lieu d'un contrôle systématique comme cela est le cas actuellement. De même, la durée d'utilisation d'une bouteille avant réépreuve peut-être plus longue, voire de trente ans ce qui correspond à la longévité d'une bouteille à l'heure actuelle. Tout comme précédemment, cette réépreuve du maintien de la bonne qualité des soudures laser et donc de l'étanchéité des bouteilles, peut, éventuellement, se faire par prélèvement d'échantillons au lieu d'un contrôle systématique.

Selon le procédé, conforme à l'invention, les parties à assembler, par soudure au laser, notamment le couvercle 2, la virole 4 et le fond 5 sont, préalablement, décapés et nettoyés, par exemple, par grenaillage. Par ailleurs, selon l'invention, ce couvercle 2, la virole 4 et le fond 5 peuvent recevoir avant soudure, un revêtement de protection anticorrosion par métallisation, tel que l'application de zinc en fusion. En fait, il convient d'observer qu'une telle métallisation, préalable à la soudure, au laser, sans empêcher cette dernière, a pour avantage de conduire à une protection anti-corrosion immédiate de cette soudure. De plus, ce procédé est plus efficace qu'une métallisation après soudure, dans la mesure où, dans ce dernier cas de figure, il peut se présenter quelques difficultés à faire pénétrer le revêtement de protection, par exemple, le zinc en fusion, dans les recoins formés, notamment, par la superposition des bords 6 et 10, respectivement 17 et 18 correspondant au couvercle 2, à la virole 4 et au fond 5.

En outre, cette application d'un revêtement de protection anti-corrosion, avant soudure, est rendue possible, du fait qu'il n'est plus nécessaire, selon l'invention, d'effectuer un recuit de normalisation de la bouteille 1 après soudure. Il est certain, en effet, que le faible échauffement produit par la soudure au laser, évite les tensions internes au niveau des parties assemblées, ainsi que leur déformation. C'est également en évitant la déformation, par soudure, de la virole 4 que cette dernière peut être pourvue, à son extrémité supérieure et, éventuellement, inférieure et par ce procédé, d'un couvercle 2 et d'un fond 5.

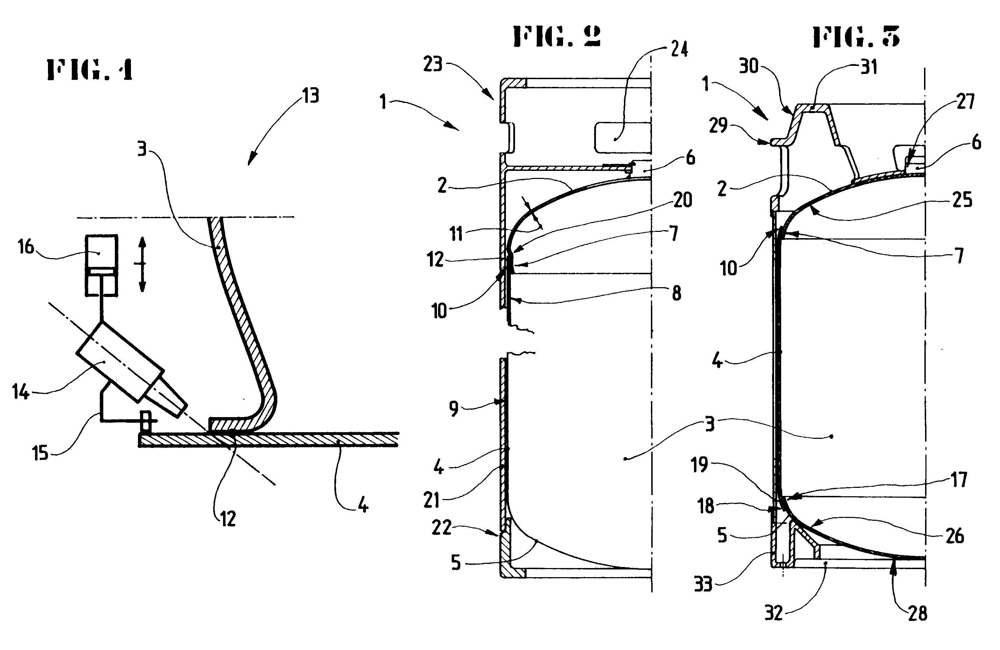

Les figures 2 à 6 correspondent à différents modes de réalisation de bouteilles 1 conformes à l'invention et confectionnées selon le procédé décrit ci-dessus.

Ainsi, dans le cadre de la figure 2, l'on constate que la virole 4 est prééquipée d'un fond 5, par exemple par un procédé d'emboutissage ou autre, en vue de définir le contenant 3. En outre, le bord périphérique 7 du couvercle 2 est préformé sous forme d'un rétreint 20 lui permettant de se superposer au bord périphérique supérieur 10 de la virole 4 du côté interne 8 à cette dernière.

Bien entendu, une telle bouteille 1 est en mesure de recevoir, tout comme par le passé, un rebord annulaire formant assise, au niveau de son fond 5, ce rebord annulaire étant, cependant, associé à ce dernier, par un procédé de soudure au laser. En outre, les moyens 6 à même de recevoir un robinet et/ou un détendeur peuvent être à même d'accueillir un capuchon équipé de moyens de préhension. Toutefois, selon un autre mode de réalisation, plus particulièrement représenté dans cette figure 2, cette bouteille 1 peut être munie d'une enveloppe de protection extérieure 21, par exemple en matériau synthétique, concevant, simultanément, une assise 22 dans sa partie inférieure et des moyens de préhension 23 à hauteur de sa partie supérieure. En fait, cette assise 22 et les moyens de préhension 23 sont définis par des rebords annulaires prolongeant l'enveloppe de protection 21, précisément, dans sa partie inférieure et dans sa partie supérieure. A noter qu'en ce qui concerne le rebord annulaire situé dans la partie supérieure, il reçoit des ouvertures 24 autorisant le passage d'une main et, par conséquent, la préhension de la bouteille 1.

Une telle enveloppe de protection 21 a pour avantage, de par sa conception, par exemple en matière synthétique, d'assurer une bonne protection de la bouteille à l'égard des chocs et dommages extérieurs. Elle garantit, ainsi, une meilleure longévité de la protection anticorrosion appliquée sur la bouteille par métallisation ou autre. Finalement, puisque cette enveloppe de protection constitue, en sol, la finition externe d'une bouteille, celle-ci peut être dispensée de l'application de couches de finition de peinture ou analogue.

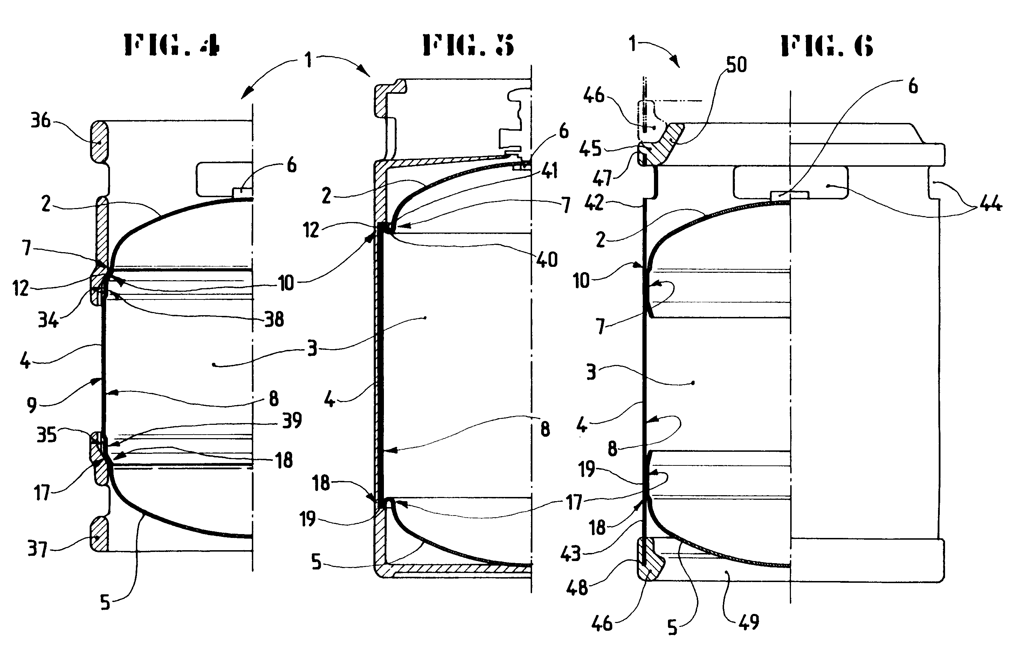

Dans le cadre de la figure 3, il est illustré un autre mode de réalisation de la bouteille 1, selon lequel la superposition des bords 7 et 10 correspondant au couvercle 2 et à la virole 4 et, des bords 17, 18 respectivement du fond 5 et de la partie inférieure de la virole 4, se situent à hauteur de la courbure, respectivement, 25, 26 définie, entre, d'une part, le sommet 27 et la partie cylindrique de la bouteille 1 et, d'autre part, entre cette partie cylindrique et la base 28. Une telle conception évite la réalisation de rétreint. De plus, elle a pour avantage de dégager la virole 4 de toute aspérité. En outre, l'ajustement entre les différents bords 7 et 10 et 17 et 18 de manière à respecter un interstice au plus égal au 2/10 voire 1/10 de l'épaisseur 11 des parois, est considérablement facilité dans ce cas.

Tout comme le mode de réalisation illustré dans la figure 2, cette bouteille 1, telle que représentée dans la figure 3, comporte une enveloppe de protection externe 21 définissant l'assise 22 et les moyens de préhension 23. A noter, à ce propos, que cette enveloppe de protection externe 21 peut être conformée, à hauteur de cette assise 22 et desdits moyens de préhension 23 de manière à permettre le gerbage des bouteilles 1. Plus précisément, le rebord annulaire 29 formant les moyens de préhension 23 et prolongeant ladite enveloppe de protection externe 21 à hauteur de son extrémité supérieure, présente un rétreint ou épaulement 30 de manière à définir une partie section plus réduite 31 à même de prendre position dans un évidement 32, de section ajustée, aménagée dans le rebord annulaire 33 définissant l'assise 22.

Dans le cadre de la figure 4, le bord périphérique 7, respectivement 17 du couvercle 2 et du fond 5, sont préformés de manière à pouvoir se superposer au bord supérieur 10 et, respectivement, au bord inférieur 18 de la virole 4, du côté externe 9 de cette dernière. Dans le cadre de cette configuration, il est possible, tel que représenté dans cette figure 4, de sertir sur l'extrémité libre 34, 35, non soudée, des bords périphériques 7 et 17, respectivement du couvercle 2 et du fond 5, une pièce annulaire 36, 37, dont l'une remplit la fonction de moyens de préhension 23 et l'autre d'assise 22 de la bouteille 1. On note, aussi, qu'à hauteur de ses bords supérieur 10 et inférieur 18, la virole 4 comporte un rétreint 38, 39 sur lequel est à même de se positionner le couvercle 2 et le fond 4.

On se réfère, à présent, au mode de réalisation représenté dans la figure 5, le bord périphérique 7, respectivement 17, du couvercle 2 et du fond 5 sont préformés de manière à définir une gouttière en "U" 40. Celle-ci s'engage dans la virole 4 de section ajustée à cet effet. Plus précisément, le rebord circulaire externe 41 de la gouttière 40 préformée à hauteur du bord périphérique 7, respectivement 17 du couvercle 2 et du fond 5, vient se superposer, du côté interne 8 au bord supérieur 10, respectivement, inférieur 18 de la virole 4.

Dans le cadre de la figure 6, il est repris une solution similaire à celle exposée dans la figure 2 dans la mesure où le bord périphérique 7 du couvercle et celui 17 du fond 5 sont conformés de manière à venir se superposer au bord supérieur 10 et, respectivement, au bord inférieur 18 de la virole 4, du côté interne 8 de cette dernière. Toutefois, le bord périphérique 7 du couvercle 2, tout comme celui 17 du fond 5 ne présentent pas de rétreint. En outre, l'on observe, sur cette figure 6, qu'au-delà des joints de soudure, 12, 19, les bords supérieur 10 et inférieur 18 de ladite virole 4 sont prolongés, respectivement, vers le haut et vers le bas de manière à définir des rebords annulaires 42, 43, dont l'un 42 est équipé d'ouvertures 44 et constitue, de ce fait, des moyens de préhension 23, tandis que l'autre 43, s'étendant vers le bas, vient à former l'assise 22. En fait, ce type de configuration peut se retrouver dans chacun des modes de réalisation des figures 2, 3, 5 et 6, c'est-à-dire à chaque fois que le bord périphérique 7 du couvercle 2 et/ou le bord périphérique 17 du fond 5 se situent du côté interne 8 de la virole 4.

A noter, dans le cadre de cette figure 6, la présence d'un bourrelet de protection 45, 46, par exemple, en matériau synthétique, venant habiller le chant supérieur 47 et le chant inférieur 48 de la virole 4. De plus, de tels bourrelets de protection 45, 46 peuvent être conformés de manière à rendre les bouteilles 1 gerbables. Ainsi, le bourrelet de protection 46, équipant le chant inférieur 48 de la virole 4, est de forme annulaire et définit un évidement central 49 dans lequel peut prendre position un bossage circulaire 50 équipant le bourrelet de protection 46 surmontant le chant supérieur 47 de la virole 4 correspondant à une bouteille 1 disposée immédiatement en dessous. Ainsi, les bouteilles 1 superposées conservent, de ce fait, leur alignement vertical.

Au vu de la description qui précède, l'on constate que le procédé, selon l'invention, permet la conception et l'assemblage de bouteilles notamment à gaz liquéfié avec un gain de temps considérable en comparaison des procédés mis en oeuvre jusqu'à présent. En fin de compte, ce gain de temps est issu d'une réduction du nombre des opérations nécessaires à cette conception desdites bouteilles d'où il en résulte, pour une capacité de production donnée, une unité de fabrication de taille plus réduite.

En outre, le procédé selon l'invention permet d'aboutir à des bouteilles de conception nouvelle, par conséquent, de conception plus simple, dans tous les cas plus fonctionnelle et voire plus esthétique.

## Revendications

1. Procédé de fabrication et d'assemblage de bouteilles, notamment de gaz liquéfié, selon lequel, après conception d'au moins un couvercle (2) et d'un contenant (3) se présentant sous forme d'une virole (4) prééquipée ou non d'un fond (5), on préforme le bord périphérique (7) du couvercle (2) de sorte qu'il puisse se superposer, du côté externe ou interne, au bord supérieur (10) de la virole (4) et que l'interstice préservé entre eux est au plus égal à 2/10 de l'épaisseur (11) des parois qui les composent et qu'après application d'un revêtement de protection anticorrosion par métallisation sur ce couvercle (2) et ce contenant (3), on réalise une soudure pénétrante au laser entre le bord périphérique (7) dudit couvercle (2) et le bord supérieur (10) de la virole (4), ceci par déplacement relatif du joint de soudure (12) au droit d'une torche laser (14).

2. Procédé selon la revendication 1, caractérisé en ce que le bord périphérique (17) du fond (5) est préformé en vue de se superposer au bord inférieur (18) de la virole (4) de sorte que l'interstice préservé entre eux est au plus égal à 2/10 de l'épaisseur (11) des parois qui les composent et qu'après application d'un revêtement de protection anticorrosion par métallisation, il est réalisé une soudure pénétrante au laser entre le bord périphérique (17) du fond (5) et le bord inférieur (18) de la virole (4), ceci par déplacement relatif du joint de soudure (19) au droit d'une torche laser (14).

3. Procédé selon l'une quelconque des revendications 1 et 2, caractérisé par le fait qu'entre le bord périphérique (7) du couvercle (2) et le bord supérieur (10) de la virole (4) et/ou le bord périphérique (17) du fond (5) et le bord inférieur (18) de ladite virole (4), est préservé un interstice, avant soudure, au plus égal à 1/10 de l'épaisseur (11) des parois composant ce couvercle (2), la virole (4) et ledit fond (5).

4. Installation permettant la mise en oeuvre du procédé selon l'une quelconque des revendications 1 à 3 comportant une torche laser (14) équipée, d'une part, de moyens de prise de référence (15) sur la bouteille (1) à assembler par soudure en vue d'assurer son maintien à une distance et dans une position constante par rapport au joint de soudure (12, 19) et, d'autre part, de moyens (16) pour maintenir en applique ces moyens de prise de référence (15) sur ladite bouteille (1), l'installation étant complétée par des moyens de commande en rotation de la bouteille (1) en vue de faire évoluer ledit joint de soudure (12, 19) au droit de ladite torche laser (14).

## Claims

1. Process for manufacturing and assembling bottles, viz. liquified gas bottles, according to which upon designing of at least a cover (2) and a container (3) in the shape of a shell (4) pre-fitted or not with a bottom (5) the peripheral edge (7) of the cover (2) is so pre-shaped that it can be superposed, at the outer or inner side, on the upper edge (10) of the shell (4) and the clearance left between same is at most equal to 2/10ths of the thickness (11) of the walls which they are comprised of and upon applying of a corrosion-proof protection coating through metallization on this cover (2) and this container (3) a penetrating laser welding is carried out between the peripheral edge (7) of said cover (2) and the upper edge (10) of the shell (4), this through relative displacement of the welding seam (12) in front of a laser torch (14).

2. Process according to claim 1, characterized in that the peripheral edge (17) of the bottom (5) is so pre-shaped with a view to be superposed on the lower edge (18) of the shell (4) that the clearance left between same is at most equal to 2/10ths of the thickness (11) of the walls which they are comprised of and that upon applying of a corrosion-proof protection coating through metallization a penetrating laser welding is carried out between the peripheral edge (17) of the bottom (5) and the lower edge (18) of the shell (4), this through relative displacement of the welding seam (19) in front of a laser torch (14).

3. Process according to any of claims 1 and 2, characterized in that between the peripheral edge (7) of the cover (2) and the upper edge (10) of the shell (4) and/or the peripheral edge (17) of the bottom (5) and the lower edge (18) of said shell (4) is left a clearance which, before welding, is at most equal to 1/10th of the thickness (11) of the walls this cover (2), the shell (4) and said bottom (5) are comprised of.

4. Installation allowing the implementation of the process according to any of claims 1 to 3, including a laser torch (14) provided, on the one hand, with means for taking reference (15) on the bottle (1) to be assembled through welding with a view to ensure its maintaining at a distance and in a constant position with respect to the welding seam (12, 19) and, on the other hand, means (16) for maintaining these means for taking reference (15) applied against said bottle (1), the installation being completed with means for controlling the bottle (1) in rotation with a view to cause said welding seam (12, 19) to progress in front of said laser torch (14).

## Patentansprüche

1. Verfahren zum Herstellen und Zusammenfügen von Flaschen, nämlich von Flüssiggasflaschen, gemäß dem nach dem Entwurf wenigstens eines Deckels (2) und eines als eine Hülle ausgestalteten Behälters (3), der mit einem Boden (5) vorversehen ist oder nicht, der Umkreisrand (7) des Deckels (2) so vorgeformt wird, daß er an der Außen- oder Innenseite auf den oberen Rand (10) der Hülle (4) gesetzt werden kann und der zwischen diesen letzten freigehaltene Spalt höchstens gleich 2/10 der Dicke (11) der Wände ist, aus denen sie bestehen, und nach dem Anbringen einer korrosionsbeständigen Schutzverkleidung durch Metallisierung auf diesem Deckel (2) und diesem Behälter (3) eine eindringende Laserschweißung zwischen dem Umkreisrand (7) des genannten Deckels (2) und dem oberen Rand (10) der Hülle (4) durchgeführt wird, und zwar durch Relativbewegung der Schweißnaht (12) gegenüber einer Laserlampe (14).

2. Verfahren nach Anspruch 1, dadurch gekennzeichnet, daß der Umkreisrand (17) des Bodens (5) so vorgeformt wird, um auf den unteren Rand (18) der Hülle (4) gesetzt zu werden, daß der zwischen diesen letzten freigehaltene Spalt höchstens gleich 2/10 der Dicke (11) der Wände ist, aus denen sie bestehen, und daß nach dem Anbringen einer korrosionsbeständigen Schutzverkleidung durch Metallisierung eine eindringende Laserschweißung zwischen dem Umkreisrand (17) des genannten Bodens (5) und dem unteren Rand (18) der Hülle (4) durchgeführt wird, und zwar durch Relativbewegung der Schweißnaht (19) gegenüber einer Laserlampe (14).

3. Verfahren nach irgendeinem der Ansprüche 1 und 2, dadurch gekennzeichnet, daß zwischen dem Umkreisrand (7) des Deckels (2) und dem oberen Rand (10) der Hülle (4) und/oder dem Umkreisrand (17) des Bodens (5) und dem unteren Rand (18) der genannten Hülle (4) ein Spalt freigehalten wird, der vor der Schweißung höchstens gleich 1/10 der Dicke (11) der Wände ist, aus denen dieser Deckel (2), die Hülle (4) und der genannte Boden (5) bestehen.

4. Anlage, die die Anwendung des Verfahrens nach irgendeinem der Ansprüche 1 bis 3 erlaubt und eine Laserlampe (14) umfaßt, die, einerseits, mit Mitteln (15) zur Bezugnahme auf die durch Schweißung zusammenzufügende Flasche, um deren Aufrechterhaltung auf Abstand und in einer konstanten Lage bezüglich der Schweißnaht (12, 19) zu sichern, und, andererseits, mit Mitteln (16), um diese Bezugnahmemittel (15) an die genannte Flasche (1) anliegend zu halten, versehen ist, wobei die Anlage mit Mitteln zum Steuern der Flasche (1) in Drehung, um die Schweißnaht (12, 19) gegenüber der genannten Laserlampe fortbewegen zu lassen, ergänzt ist.
